(19) Europäisches Patentamt European Patent Office Office européen des brevets

(11) **EP 1 238 395 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(21) Anmeldenummer: **00926761.8**

(22) Anmeldetag: **27.03.2000**

(51) Int Cl.:
*G21C 3/07* (2006.01)    *C22F 1/18* (2006.01)

(86) Internationale Anmeldenummer:
**PCT/EP2000/002681**

(87) Internationale Veröffentlichungsnummer:
**WO 2000/058973 (05.10.2000 Gazette 2000/40)**

(54) **BRENNELEMENT FÜR EINEN DRUCKWASSER-REAKTOR UND VERFAHREN ZUR HERSTELLUNG SEINER HÜLLROHRE**

FUEL ELEMENT FOR A PRESSURISED-WATER REACTOR AND METHOD FOR PRODUCING THE CLADDING TUBE THEREOF

ELEMENT COMBUSTIBLE POUR REACTEUR A EAU SOUS PRESSION ET PROCEDE PERMETTANT DE FABRIQUER SES GAINES

(84) Benannte Vertragsstaaten:
**DE FR GB SE**

(30) Priorität: **29.03.1999 DE 19914013**

(43) Veröffentlichungstag der Anmeldung:
**11.09.2002 Patentblatt 2002/37**

(60) Teilanmeldung:
**06009389.5 / 1 760 724**

(73) Patentinhaber: **AREVA NP GmbH**
**91052 Erlangen (DE)**

(72) Erfinder:
• **GARZAROLLI, Friedrich**
**D-91315 Höchstadt (DE)**
• **SEIBOLD, Angelika**
**D-90765 Fürth (DE)**
• **RUHMANN, Heinrich**
**D-91074 Herzogenaurach (DE)**

(74) Vertreter: **Mörtel & Höfner**
**Patentanwälte**
**Äussere Sulzbacher Strasse 159/161**
**90491 Nürnberg (DE)**

(56) Entgegenhaltungen:
EP-A- 0 574 194    WO-A-93/17137
US-A- 4 751 044    US-A- 5 285 485
US-A- 5 609 697    US-A- 5 618 356
US-A- 5 618 356    US-A- 5 790 623
US-A- 5 790 623

**Beschreibung**

Die Erfindung betrifft ein Brennelement für einen Druckwasser-Reaktor, mit einem seitlich offenen Skelett aus Steuerstab-Führungsrohren, an denen mehrere Abstandhalter sowie ein Brennelement-Kopf und ein Brennelement-Fuß befestigt sind, und mit in das Skelett eingesetzten, gasdichten, jeweils eine Säule aus Brennstoff-Tabletten umschließenden, mehrschichtigen Hüllrohren. Die Erfindung betrifft ferner ein Verfahren zur Herstellung dieser Hüllrohre.

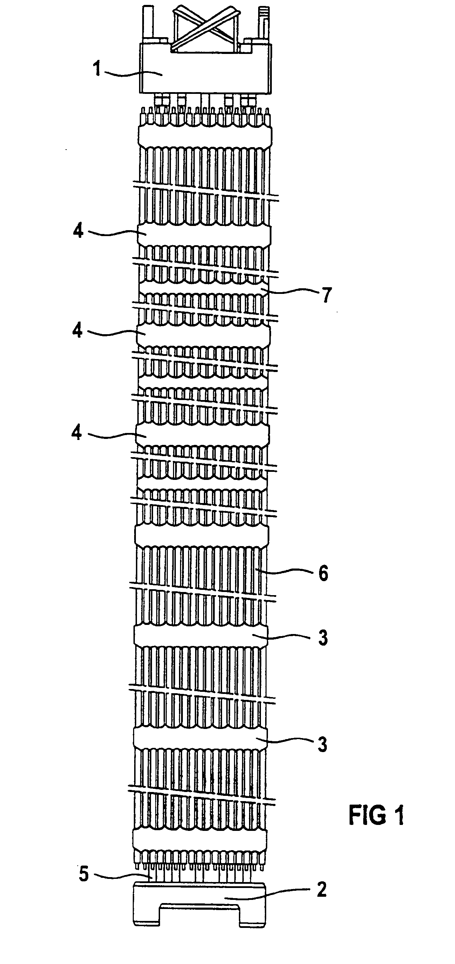

In Figur 1 ist ein derartiges Brennelement mit dem Kopf 1, dem Fuß 2 und Abstandhaltern 3 und 4 dargestellt, die an den Führungsrohren 5 befestigt sind, wodurch ein seitlich offenes Skelett entsteht, in das die Brennstäbe 6 eingesetzt sind. Im Betrieb strömt Kühlwasser von unten nach oben durch das Brennelement und kann auch seitlich aus den Zwischenräumen zwischen den Brennstäben hinaus in benachbarte Brennelemente eintreten. Ferner ist aus Figur 1 erkennbar, daß zwischen Abstandhaltern 4 im oberen Teil des Brennelements zusätzliche Mischgitter 7 vorgesehen sein können, die als Träger für Strömungsleitschaufeln dienen. Solche Strömungsleitschaufeln sind vorteilhaft zumindest an der Oberseite von Abstandhaltern 4 im oberen Teil des Brennelements ebenfalls vorgesehen, um eine turbulente Mischung des Kühlwassers und eine bessere Anströmung der Brennstäbe zu erreichen.

Entsprechende Schaufeln sind z.B. in der DE-A-15 64 697 beschrieben und in Figur 2 wiedergegeben. Es sind jedoch auch andere Abstandhalter (z.B. aus aneinander geschweißten Hülsen) sowie andere Geometrien der Strömungsleitschaufeln 8 möglich, wobei in den Zwischenräumen zwischen benachbarten Brennstäben auch eine abweichende Anzahl der Mischflügel vorgesehen sein kann.

Im Druckwasser-Reaktor wird nur ein geringer Teil (normalerweise höchstens 5 %) des flüssigen Kühlwassers an den Außenflächen der Brennstäbe verdampft, vielmehr wird die im Brennstoff durch Kernspaltung erzeugte Wärme im wesentlichen durch konvektiven Abtransport von entsprechend heißem Wasser abgeführt, das unter hohem Druck gehalten wird. Ein Siedewasser-Reaktor dagegen arbeitet mit niedrigerem Druck und niedrigeren Temperaturen, wobei die Wärme aus den Brennstäben zumindest im oberen Teil des Brennelements im wesentlichen durch isotherme Verdampfung in einem Zweiphasen-Gemisch abtransportiert wird. Dabei ist es nötig, den entstehenden Dampf zu kanalisieren; die Brennelemente sind daher seitlich von Brennelement-Kästen umgeben.

Die Technik des Siedewasser-Reaktors und des Druckwasser-Reaktors haben sich in unterschiedlichen Richtungen entwickelt. Wegen des Anlagenschutzes und aus ähnlichen Gründen werden dem Druckwasser z.B. Lithiumhydroxid und ähnliche Zusätze beigemischt, die im Siedewasser nicht anwendbar sind und zu einer unterschiedlichen Wasserchemie (z.B. unterschiedlicher Sauerstoffkonzentration) führen. Auch die Größe und Anzahl der Brennstäbe in den Brennelementen sowie die Anordnung von Steuerelementen im Reaktorkern ist unterschiedlich. Die Unterschiede in Temperatur und Druck des Kühlwassers führen auch zu unterschiedlichen Belastungen der Hüllrohre und zu einem unterschiedlichen Verhalten des Brennstoffs, insbesondere zu unterschiedlichen Zeitkonstanten des Reaktorkerns, wenn dieser als ein regelungstechnisches Gesamtsystem mit Rückkopplung betrachtet wird.

Dieses unterschiedliche regelungstechnische Verhalten hat dazu geführt, daß die Leistung von Druckwasser-Reaktoren nur sehr langsam verändert wird, der Druckwasser-Reaktor also fast quasi stationär betrieben und besonders zur Deckung von Grundlasten geeignet ist. Für die Deckung von Spitzenlasten des an den Reaktor angeschlossenen Verbrauchers sind Siedewasser-Reaktoren besser geeignet, deren Leistung z.B. wesentlich schneller und rampenförmig hochgefahren wird. Dies führt dazu, daß die Hüllrohre, die bereits an ihrer Außenfläche entsprechend der unterschiedlichen Wasserchemie und Betriebstemperaturen anderen chemischen Belastungen ausgesetzt sind (z.B nodulare Korrosion im Siedewasser-Reaktor bzw. uniforme Korrosion im Druckwasser) und unterschiedlichen Betriebsdrücken standhalten müssen, auch an der Innenseite unterschiedlich belastet sind.

Dies hat dazu geführt, daß die Hüllrohre von Siedewasser-Reaktoren in der Regel aus einer anderen Legierung (nämlich Zirkaloy-2) bestehen als die Hüllrohre von Druckwasser-Reaktoren, für die Zirkaloy-4 entwickelt wurde. Für die Druckrohre von Hochtemperaturreaktoren ist auch eine Zirkoniumlegierung mit 2,5 % Niob bekannt, die auch in russischen Leichtwassergekühlten Reaktoren verwendet ist.

In Tabelle 1 ist die genormte Zusammensetzung von technisch reinem Zirkonium für die Nuklearindustrie (sogenanntem "Zirkonium-Schwamm", "sponge"), Zirkaloy-2 ("Zry-2"), Zirkaloy-4 ("Zry-4") und Zirkonium-Niob ("Zr/Nb") angegeben, wobei Sauerstoff als eine in großen Mengen tolerierbare Verunreinigung angesehen wird, auch wenn sie wegen ihrer härtenden Wirkung auf das Zirkonium häufig erwünscht ist und daher zulegiert wird.

Wird eine höhere Anreicherung der Brennstoff-Tabletten mit spaltbaren Isotopen des Urans und/oder Plutoniums und somit ein größerer nutzbarer Energieinhalt (sogenannter "Abbrand") des Brennstoffs benutzt, so können die Brennelemente länger im Kern verbleiben, falls ihre Hüllrohre den entsprechenden Anforderungen durch die längere Standzeit gewachsen sind. Dies bedeutet in Druckwasser-Brennelementen, daß die Außenfläche der Hüllrohre besonders beständig gegen die im Druckwasser ablaufende uniforme Korrosion sein müssen und von dem erhöhten Druck auch bei längeren Standzeiten nicht derart auf den Brennstoff gepreßt werden dürfen, daß sie dadurch Schaden erleiden. Bei der Entwicklung von Hüllrohren, die den gestiegenen Anforderungen einer längeren Standzeit im Druckwasser-Reaktor genügen, ist daher besonders die mechanische Stabilität des gesamten Rohres und die Beständigkeit der Außenfläche gegenüber uniformer Korrosion zu beachten.

Diese Bedingungen werden zufriedenstellend durch einschichtige Hüllrohre erfüllt, wie sie in EP-B-0 498 259 beschrieben sind und im allgemeinen Fall aus Zirkonium mit 0,8 ... 1,7 % Sn, 0,07 ... 0,5 % Fe, 0,05 ... 0,35 % Cr, 0,07 ... 0,2 % O, bis etwa 0,015 % Si und bis maximal 0,1 % Ni bestehen. Dabei hat sich als besonders wichtig erwiesen, daß die Metalle Fe, Cr und Ni, die in Zirkonium praktisch nicht löslich sind und als Intermetallische Verbindungen ("Sekundärphasen") ausgeschieden werden (sogenannte "Sekundärausscheidungen") eine mittlere Teilchengröße von etwa 0,1 bis 0,3 μ besitzen. Diese Teilchengröße wird durch die thermische Behandlung eingestellt, der die Legierung unterworfen wird, nachdem sie zunächst auf eine Temperatur gebracht, in der die Ausscheidungen gelöst sind (sogenanntes "Lösungsglühen") und dann rasch abgekühlt wurde (sogenanntes "Quenching"). Die dabei entstehende Größe und Verteilung der Sekundärausscheidungen kann durch einen "Particle Growth Parameter" berechnet werden und wird in der Praxis der Fertigung durch eine kumulierte "normalisierte Glühdauer" A eingestellt

$$A = \sum t_i \cdot \exp(-Q/T),$$

wobei $T_i$ die Temperatur in Kelvin bei einem Fertigungsschritt i, $t_i$ die Dauer dieses Fertigungsschrittes und Q einer Aktivierungsenergie entspricht, wobei der Wert Q = 40.000 Kelvin angesetzt werden kann.

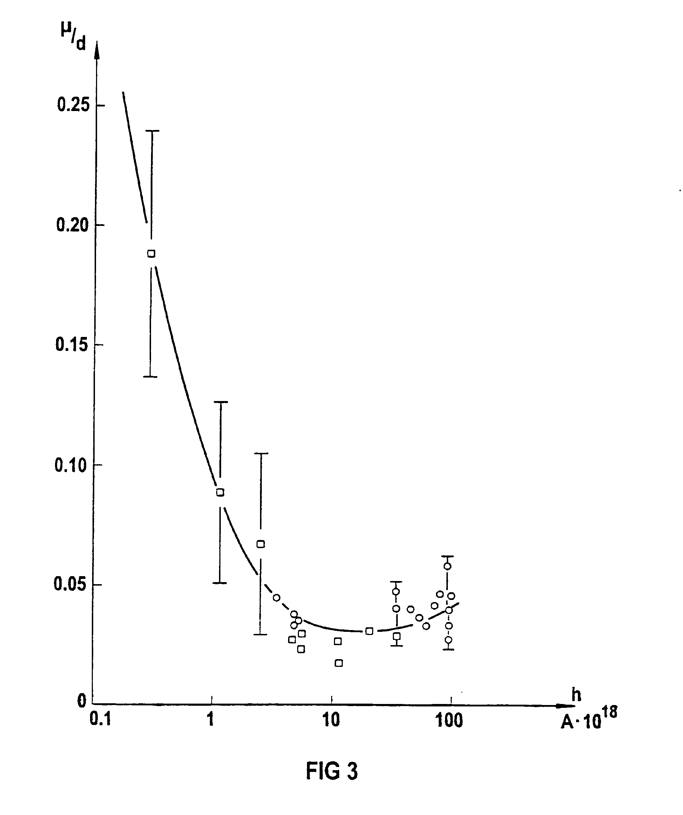

Figur 3 zeigt den täglichen Zuwachs der uniformen Oxidationsschicht an der Oberfläche eines Hüllrohrs aus Zirkaloy-4 in einem Druckwasser-Reaktor bei Betriebstemperaturen von etwa 300 °C in Abhängigkeit von der normalisierten Glühdauer A, die bei der Herstellung des Hüllrohrs verwendet wurde. Im allgemeinen werden für Druckwasser-Reaktoren normalisierte Glühdauern zwischen $2 \cdot 10^{-18}$ und $50 \cdot 10^{-18}$ Stunden als günstig für derartige Zirkaloy-ähnliche Legierungen, wie sie in EP-B-0 498 259 beschrieben sind, angesehen (Garzarolli et al in: "Zirkonium in the Nuclear Industry: Eighths International Symposium", Philadelphia 1989 (ASTM Special Technical Publication 1023), Seiten 202 bis 212). Eine so große Glühdauer kollidiert aber mit dem Bestreben des Fachmanns, durch ein Pilgerverfahren mit Kaltverformungen das Korn der Legierung, das ebenfalls bei hohen Temperaturen zu großen Körnern reift, durch Kaltverformungen zu kleinen Körnern zu zerbrechen, um die mechanische Stabilität des Hüllrohrs zu erhöhen, da ein feines Korn zu einer hohen Stabilität bei hoher Duktilität führt. Deshalb wird nach der erwähnten Patentschrift die hohe normalisierte Glühdauer dadurch erreicht, daß das gequenchte Material zunächst noch bei hohen Temperatur geschmiedet wird, bevor es zu einem Rohr-Rohling extrudiert und dann in anschließenden Pilgerschritten mit mäßigen Zwischenglühungen kaltverformt wird.

Einen anderen Weg stellt ein Verbundrohr dar, das als sogenannter "Duplex" aus einer verhältnismäßig dicken Matrix-Schicht mit einer dünneren äußeren Schutzschicht aus einer anderen Zirkoniumlegierung besteht. Die Matrix stellt die erforderliche mechanische Stabilität sicher, während die äußere Schutzschicht beständig gegen die im Druckwasser-Reaktor drohende uniforme Korrosion ist. Erstmals ist ein solcher Duplex in EP-B-0 212 351 beschrieben, wobei für die äußere Schutzschicht 0,1 bis 1 % V und bis zu 1 % Fe als Legierungszusätze verwendet sind. In EP-B-0 301 395 ist ein Duplex beschrieben, bei dem die Außenlegierung 0,2 bis 3 % Nb und/oder einen Gesamtgehalt an Fe, Cr, Ni und Sn zwischen 0,4 und 1 % enthält (Rest: jeweils Zirkonium technischer Reinheit). Aus EP-B-0 630 514 ist bekannt, daß eine derartige Außenschicht für eine Zirkaloy-Matrix auch einen größeren Gesamtgehalt an Fe, Cr, Ni, Sn enthalten kann, sofern für die einzelnen Legierungszusätze bestimmte Einschränkungen eingehalten werden, insbesondere der Zinngehalt unter dem Zinngehalt des Zirkaloys liegt. Die genannten Hüllrohre haben sich auch unter den Betriebsbedingungen des Druckwasser-Reaktors gut bewährt und ermöglichen die angestrebten hohen Standzeiten. In US 5,609,697 und EP 0574194 A1 ist die Herstellung eines Duplex-Hüllrohrs beschrieben, bei der eine erste und eine zweite Zirkoniumlegierung unabhängig voneinander thermisch behandelt werden. Aus der ersten Legierung wird ein Matrixrohr erzeugt, in das eine Schutzschicht in Form eines Rohres aus der zweiten Legierung metallurgisch eingebunden wird. Aus US 5,790,623 ist ein Duplex-Hüllrohr bekannt, bei dem die innere Schutzschicht aus einer Wismut enthaltenden Legierung besteht.

Ganz anders wäre das Diagramm der Figur 3 beim Siedewasser-Reaktor. Dort tritt wegen der niedrigeren Betriebstemperaturen fast keine uniforme Korrosion auf, jedoch bilden sich Oxid-Pusteln. Hier können große Sekundärausscheidungen als keine der Pusteln wirken, die aber vermieden werden, wenn das Material die Sekundärphasen fein verteilt sind und nur einer besonders niedrigen normalisierten Glühdauer unterworfen wurde. Häufig zeigten aber Hüllrohre von Siedewasser-Brennstäben Korrosionsschäden, die von der Innenseite der Rohre ausgingen und auf Spannungsrißkorrosion zurückgeführt wurden. Solche Schäden wurden durch ein Verbundrohr minimiert, bei der eine Matrix aus Zirkaloy auf der Innenseite eine Schutzschicht aus technisch reinem Zirkonium, also einem weichen, aber korrosionsanfälligen Material, aufweisen. Dabei ist aber die Korrosionsanfälligkeit des Reinzirkoniums nachteilig, denn es ist unvermeidlich, daß in seltenen Fällen durch geringfügige Schäden im Rohr Wasser aus dem Siedewasser-Reaktor in das Hüllrohr-Innere eintritt und dann eine Korrosion auslöst, die zu ausgedehnten Rissen führt, durch die das Wasser des Reak tors wesentlich stärker verunreinigt werden kann als durch eine Vielzahl von Brennstäben mit lokal begrenzten Schäden. Deshalb wird häufig statt einer Reinzirkonium-Schutzschicht eine Schutzschicht verwendet, bei der das Zirkonium bis zu 1 % eines anderen Legierungszusatzes enthält. So beschreibt die EP-B 0 726 966 ein Hüllrohr mit einer dicken Matrix-Schicht aus Zirkaloy, bei der die Sekundärausscheidungen eine Teilchengröße zwischen etwa 0,03 und 0,1 µ besitzen, und an der Innenseite eine Auskleidung aus Zirkonium mit 0,2 bis 0,8 % Eisen metallurgisch gebunden ist.

Dieses Verbundrohr ist im Siedewasser-Reaktor besonders vorteilhaft, weil durch die geringe Größe der Sekundärausscheidungen an der Außenfläche ein besonders geringer A-Wert erforderlich wird, der bei der entsprechenden Legierung der Schutzschicht auf der Hüllrohr-Innenseite ebenfalls nur ein geringes Wachstum von Sekundärausscheidungen und Korn hervorruft, so daß die Innenseite sowohl besser gegen Korrosion geschützt ist, als auch weich bleibt, weil sie keiner übermäßigen Dispersionshärtung infolge von Fe-Sekundärausscheidungen unterliegt.

Ein derartiges, für Siedewasser-Bedingungen entworfenes Hüllrohr ist aber für Druckwasser-Anwendungen vollkommen ungeeignet, denn die geringe Größe der Sekundärausscheidungen an der Außenfläche würde die uniforme Korrosion beschleunigen und bereits nach kurzen Standzeiten zu einem Austausch des Hüllrohrs zwingen. Andererseits ist die Innenauskleidung auch bei den bisherigen Betriebsbedingungen des Druckwasser-Reaktors nicht erforderlich, da bisher keine von der Innenfläche ausgehenden Schäden (Spannungsrißkorrosion) beobachtet wurden. Außerdem wird die Leistung der Druckwasser-Reaktoren nicht auf die rampenförmige Weise rasch verändert, wie dies bei Siedewasser-Reaktoren üblich ist. Vielmehr erfordern die regelungstechnischen Bedingungen des Druckwasser-Reaktors ohnehin, daß die Leistung nur langsam verändert wird, wobei der Steuerung eine Änderungsgeschwindigkeit vorgegeben wird, bei der auch berücksichtigt ist, daß die Hüllrohre nicht unzulässig beansprucht werden sollen.

Bei einer höheren Anreicherung des Brennstoffs und längeren Standzeiten ist auch das Verhalten des Brennstoffs selbst zu berücksichtigen. Da beim Zerfall eine Vielzahl gasförmiger Spaltprodukte entstehen, bläht sich der Brennstoff auf und erleidet dadurch eine Volumenvergrößerung, die zu einer Aufweitung des Hüllrohres führt, zumal dieses im Laufe der Zeit - insbesondere unter den höheren Drücken des Druckwasser-Reaktors - zusammengepreßt wird und auf den Brennstoff aufkriecht. Wird ein Brennstoff, der bereits bei niedriger Reaktorleistung die Hüllrohr-Innenseite berührt, durch eine beim Siedewasser-Reaktor übliche rasche Leistungserhöhung schnell aufgeheizt, so stellt seine thermische Ausdehnung aber eine zusätzliche Belastung des Hüllrohrs dar. In konstruktiver Hinsicht können diese Belastungen insofern berücksichtigt werden, als mindestens im oberen Ende der Brennstäbe ein Gas-Sammelraum vorgesehen ist, zwischen den Hüllrohren und den Brennstoff-Tabletten ein Spalt frei gelassen wird und das Brennelement - z.B. durch die eingangs erwähnten Strömungsleitschaufeln an den Abstandhaltern und eventuell zusätzlich eingezogene Zwischengitter -wirkungsvoll und rasch gekühlt wird. Bei der Leistungssteuerung von Druckwasser-Reaktoren ist diese Belastung bisher ohne Bedeutung, da ohnehin regelungstechnisch eine beschränkte Änderungsgeschwindigkeit der Leistung zulässig erscheint.

Der Erfindung liegt die Aufgabe zugrunde, ein Brennelement anzugeben, das einerseits hinreichend lange im Reaktor verbleiben kann, andererseits einen flexibleren Betrieb des Druckwasser-Reaktors gestattet, insbesondere eine Verwendung des Druckwasser-Reaktors zur Deckung von Bedarfspitzen des an den Reaktor angeschlossenen Verbrauchers bzw. Energieversorgungsnetzes. Insbesondere entsteht dabei die Aufgabe, ein für dieses neue Brennelement geeignetes Hüllrohr herzustellen.

Die Erfindung geht dabei von der Erkenntnis aus, daß die regelungstechnischen Beschränkungen in der Leistungssteuerung an sich stärkere Änderungsgeschwindigkeiten der Leistung eines Druckwasser-Reaktors zulassen, als bisher üblich. Dadurch wäre ein flexibler Betrieb möglich - falls das Brennelement den Belastungen, die bei raschen Lastwechseln auftreten, auch standhält.

Zur Lösung der Aufgabe sieht die Erfindung ein Brennelement mit einem seitliche offenen Skelett aus Steuerstab-Führungsrohren vor, an denen Abstandhalter sowie ein Brennelement-Kopf und ein Brennelement-Fuß befestigt sind. In das Skelett sind Hüllrohre eingesetzt, die jeweils eine Säule aus Brennstoff-Tabletten gasdicht umschließen, wobei mindestens einige Hüllrohre jeweils eine mehrschichtige Wand aufweisen. In der Mitte der Wand befindet sich gemäß der Erfindung eine mechanisch stabile Matrix aus einer ersten, stärker legierten Zirkoniumlegierung, an die eine dünnere Schutzschicht aus einer schwächer legierten, zweiten Zirkoniumlegierung metallurgisch gebunden ist, die 0,2 Gew. % bis 0,8 Gew. % Eisen und als Rest Zirkonium technischer Reinheit enthält. Diese Schutzschicht befindet sich dabei auf der den Brennstoff-Tabletten zugewandten Innenseite der Matrix. Die beiden Zirkoniumlegierungen weisen Ausscheidungen von Sekundärphasen auf, die durch Temperaturbehandlungen mit unterschiedlichen normalisierten Glühdauern zu unterschiedlicher mittlerer Größe gereift sind.

Die Erfindung geht dabei davon aus, daß diese Konstruktion des Brennelements allen hydraulischen und kühlungstechnischen Anforderungen eines längeren Betriebs bei Vollast oder Teillast genügt, insbesondere wenn zumindest die Abstandhalter in einem oberen Teil des Brennelements auf ihrer der Strömung des Druckwassers abgewandten Seite Strömungsleitschaufeln zur Durchmischung des Druckwassers tragen. Auch die Konstruktion der Brennstäbe kann diesen Anforderungen genügen, insbesondere wenn die Hüllrohre mit einem Gas erhöhten Drucks gefüllt sind, mindestens am oberen Ende einen Gas-Sammelraum ("Plenum") aufweisen und die Tabletten mit einem Ringspalt gegenüber der Hüllrohr-Innenfläche eingefüllt sind.

Außerdem berücksichtigt die Erfindung auch, daß eine Matrix, insbesondere wenn sie die in EP-B-0 498 259 beschriebenen Merkmale aufweist, bereits ausreichend korrosionsbeständig ist für einen längeren Betrieb bei Vollast.

Gegebenenfalls kann um die Matrix auch auf der Außenseite des Hüllrohres noch eine weitere Schutzschicht metallurgisch gebunden sein, wie sie z.B. in den erwähnten EP-B-0 212 351, EP-B-0 301 295 oder EP-B-0 630 514 beschrieben ist.

Eine derartige Matrix aus einer Zirkaloy-ähnlichen Zirkoniumlegierung (1 bis 1,8 Gew.-% Sn; 0,2 bis 0,6 Gew.-% Fe; bis 0,3 Gew.-% Cr; Rest: technisch reines Zirkonium, gegebenenfalls mit einem Sauerstoffgehalt bis 2,0 %) entfaltet die gewünschten Eigenschaften am Besten, wenn sie mit einer normalisierten Glühdauer A zwischen 2 bis 80 · $10^{-18}$ Stunden behandelt ist.

Eine andere, bevorzugte Möglichkeit für eine Matrix mit den gewünschten Eigenschaften besteht in einer Zirkoniumlegierung mit 0,8 bis 2,8 % Nb (gegebenenfalls bis 2,7 % weiterer Zusätze, Rest: Zirkonium technischer Reinheit einschließlich gegebenenfalls eines Sauerstoffgehalts bis 2,0 %). Vorzugsweise liegt dabei die Menge der weiteren Zusätze unter der Menge des Niob. Eine solche Niob-haltige Zirkoniumlegierung entfaltet aber die günstigsten Eigenschaften, wenn sie einer wesentlich geringeren normalisierten Glühdauer, insbesondere A kleiner 0,5 · $10^{-18}$ h, unterworfen ist.

Zwar ist die mechanische Stabilität dieser Legierungen nicht so groß, daß sie den erwähnten Ringspalt für längere Zeit sicherstellen und ein Niederkriechen des Hüllrohrs auf den Brennstoff verhindern könnten. Daß das Hüllrohr nach längeren Standzeiten durch das Volumenwachstum des Brennstoffs wieder aufgeweitet wird, überstehen diese Legierungen. Sie halten auch Lastwechseln stand, bei denen die Leistung nur kurzzeitig erheblich unter den Maximalwert abgesenkt und bald wieder auf den Maximalwert angehoben wird.

Für die Leistungssteuerung muß jedoch die Änderungsgeschwindigkeit an den ungünstigsten Fall angepaßt werden. Dieser ergibt sich, wenn beim Reaktorbetrieb bereits mehrere Lastwechsel stattgefunden haben und dann für längere Zeit nur ein Teillastbetrieb stattfindet, bei dem sich der Brennstoff thermisch kontrahiert und dadurch ein erneutes Aufkriechen des Hüllrohrs stattfindet. Dann drohen plötzliche Belastungen, wenn der Reaktor rasch wieder hochgefahren wird und sich der Brennstoff wieder thermisch ausdehnt. Dies erfordert eigentlich eine besonders hohe Duktilität des Hüllrohrs, die aber ihrerseits ein unerwünscht schnelles Aufkriechen begünstigen würde.

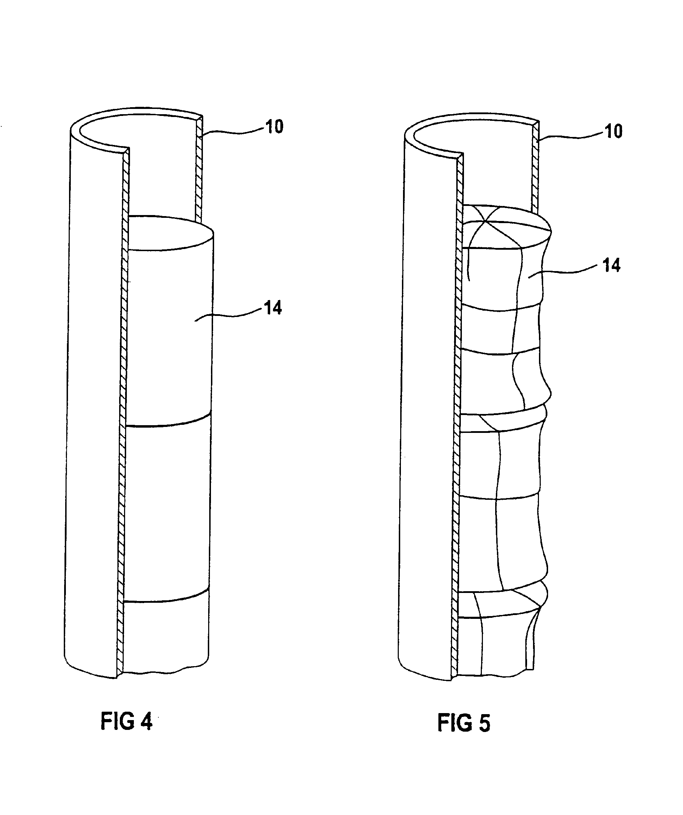

Wird außerdem der Reaktor aus einem Zustand, bei dem er mit teilweise in den Reaktorkern eingetauchten Steuerelementen nur mit Teillast betrieben wurde, durch Herausfahren der Steuerelemente hochgefahren, so erleiden die den vorbeifahrenden Steuerelementen benachbarten Brennstoff-Tabletten eine plötzliche thermische Belastung, da sie vorher von den Steuerelementen vor dem hohen Neutronenfluß geschützt waren, dem sie dann plötzlich ausgesetzt werden. Daher zerspringen die Pellets, die zunächst entsprechend Figur 4 intakt waren, eine aus Figur 5 ersichtliche Strukturänderung. Dabei können sich aus einer zersprungenen Tablette einzelne Bruchstücke verschieben und lokal gegen die Hüllrohr-Innenseite drücken. Es ist daher davon auszugehen, daß nach einer längeren Periode der Teillast zumindest lokal ein enger Kontakt zwischen Brennstab und Brennstoff auftritt ("Dekonditionierung"), der dann bei einer plötzlichen thermischen Volumenänderung des Brennstoffs erhebliche Spannungen im Hüllrohr erzeugt.

Würde das Hüllrohr ganz aus den bisher genannten Legierungen bestehen, so wären also trotzdem nur langsame Leistungssteigerungen möglich. Die Erfindung sieht jedoch vor, die erwähnten Spannungen durch die an die Innenseite der Matrix metallurgisch gebundene Schutzschicht aus dem schwächer legierten Zirkonium aufzufangen, wobei diese Schutzschicht bevorzugt aus Zirkonium technischer Reinheit besteht, das mit 0,2 bis 0,8 Gew.-% Eisen legiert ist. In der Regel enthält diese zweite Zirkoniumlegierung mehr als 0,3 Gew.-%, vorzugsweise mindestens 0,35 % Eisen. Der bevorzugte Höchstwert liegt bei 0,5 bzw. jedenfalls unter 0,6 %.

Diese Legierung entfaltet jedoch die günstigsten Eigenschaften, wenn die Ausscheidungen der Sekundärphasen eine mittlere Größe aufweisen, die einer normalisierten Glühdauer von etwa 0, 1 ... 3 · $10^{-18}$ h entspricht.

Derartig kleine Sekundärausscheidungen einer ZrSe-Legierung an der Innenseite eines Hüllrohrs sind aus der eingangs genannten EP-B-0 726 966 bekannt und kann aus einem durch Co-Extrusion von ineinander gesteckten Rohren hergestellten Verbundrohr-Rohling gefertigt werden, jedoch führt die Weiterverarbeitung des Rohlings dazu, daß nach einem Quenchen entweder beide Schichten einen hohen A-Wert erhalten, was die Wirkung der Schutzschicht beeinträchtigt, oder einen niedrigen A-Wert, also auch die Außenseite entsprechend feine Sekundärausscheidungen aufweist, was den Anforderungen eines Siedewasser-Reaktors entspricht, aber für einen Druckwasser-Reaktor schädlich ist.

Unterschiedliche Ausscheidungsgrößen an der Innenfläche und der Außenfläche eines Hüllrohrs können allerdings durch ein Verfahren erzeugt werden, das als "Partial Quenching" bekannt ist. Dabei wird bei einem Hüllrohr, das bereits durch längere Glühdauern relativ große Sekundärausscheidungen besitzt, die Innenseite durch einen Kühlmittelstrom auf niedriger Temperatur gehalten, während die Außenseite (z.B. induktiv) kurzzeitig auf Lösungstemperatur erhöht wird. Beim Abkühlen entsteht dann auf der Außenseite eine feine Dispersion von Ausscheidungen, also letztlich ein "metallurgischer Gradient" bezüglich der Ausscheidungen im Hüllrohr erzeugt. Dieser "metallurgischer Gradient" führt jedoch gerade dazu, daß auf der Außenseite wesentlich feinere Sekundärausscheidungen vorliegen als auf der Innenseite, also gerade das ebenfalls nur eine für Siedewasser geeignete Verteilung, falls beide Schichten aus einer niobfreien ZrFe-Legierung bestehen.

Das "Partial Quenching" ist aufwendig, aber zumindest theoretisch in dem Fall möglich, in dem die Matrix aus einer ZrNb-Legierung gebildet wird.

Ein solches Hüllrohr mit einer Matrix aus ZrNb, die an der Innenseite des Hüllrohrs mit einer Schutzschicht aus ZrFe metallurgisch verbunden ist, läßt sich aber auch herstellen, indem zunächst die beiden Zirkoniumlegierungen unabhängig voneinander thermisch behandelt werden, wobei jeweils eine Lösungsglühung mit anschließenden unterschiedlichen normalisierten Glühdauern A vorgenommen wird. Aus der ersten Zirkoniumlegierung und mindestens der zweiten Zirkoniumlegierung wird dann ein mehrschichtiges Verbundrohr hergestellt, dessen Wand in der Mitte eine dicke Schicht aus der ersten Zirkoniumlegierung als Matrix enthält, wobei an deren Innenseite eine Schutzschicht aus der zweiten Legierung metallurgisch-gebunden ist. Dieses Verbundrohr wird dann derart zum fertigen Hüllrohr weiterverarbeitet, daß beide Schichten dabei praktisch den gleichen thermischen Bedingungen - ohne ein Lösungsglühen - unterworfen werden.

Dabei wird die zweite Zirkoniumlegierung bis zur Vollendung des Hüllrohrs mit einer normalisierten Glühdauer behandelt, die um mindestens 80 % von der normalisierten Glühdauer verschieden ist, der die erste Zirkoniumlegierung bis zur Vollendung des Hüllrohrs unterworfen wird. Bevorzugt wird die zweite Zirkoniumlegierung vor der Herstellung des Verbundrohres bereits einer normalisierten Glühdauer zwischen $0, 1 \cdot 10^{-18}$ h und $3 \cdot 10^{-18}$ h unterworfen, vorteilhaft höchstens einer normalisierten Glühdauer unter $2 \cdot 10^{-18}$ h unterworfen.

Bevorzugt wird jedenfalls eine Zirkoniumlegierung mit 0,8 bis 2,8 % Niob vor der Herstellung des Verbundrohres mit einer kleineren normalisierten Glühdauer behandelt als die Zirkoniumlegierung der Schutzschicht.

Ein ähnliches Verfahren mit der gleichen Zusammensetzung und ähnlicher Behandlung der Schutzschicht (höchstens eine normalisierte Glühdauer unter $3 \cdot 10^{-18}$ h, vorteilhaft unter $2 \cdot 10^{-18}$ h) kann aber auch angewendet werden, wenn als Matrix eine Zirkoniumlegierung aus 1 bis 1,8 % Sn; 0,2 bis 0,6 % Fe; bis 0,3 % Cr (Rest: technisch reines Zirkonium) verwendet wird, wobei diese Matrix aber vor der Herstellung des Verbundrohres mit einer normalisierten Glühdauer von 2 bis $80 \cdot 10^{-18}$ h behandelt werden sollte.

Für die Weiterverarbeitung des Verbundrohrs zum fertigen Hüllrohr sind Verformungsschritte nötig (insbesondere Pilgerschritte), zwischen denen jeweils eine Zwischenglühung vorgenommen wird. Dabei wird vorzugsweise auch für diese Weiterverarbeitung eine maximale normalisierte Glühdauer (z. B. $3 \cdot 10^{-18}$ h) eingehalten. Dabei sind auch Glühdauern unter $2 \cdot 10^{-18}$ h fertigungstechnisch leicht beherrschbar.

Sofern ein erhöhter Schutz der Außenfläche gegen uniforme Korrosion gewünscht wird, kann beim Herstellen des Verbundrohrs auch noch eine dritte Zirkoniumlegierung metallurgisch mit der ersten Zirkoniumlegierung verbunden werden.

Anhand von mehreren Figuren werden zwei Ausführungsbeispiele der Erfindung näher erläutert. Es zeigen:

FIG 1       den bereits geschilderten beispielhaften Aufbau eines Druckwasser-Brennelements, wie er auch bei der Erfin- dung vorgesehen ist;

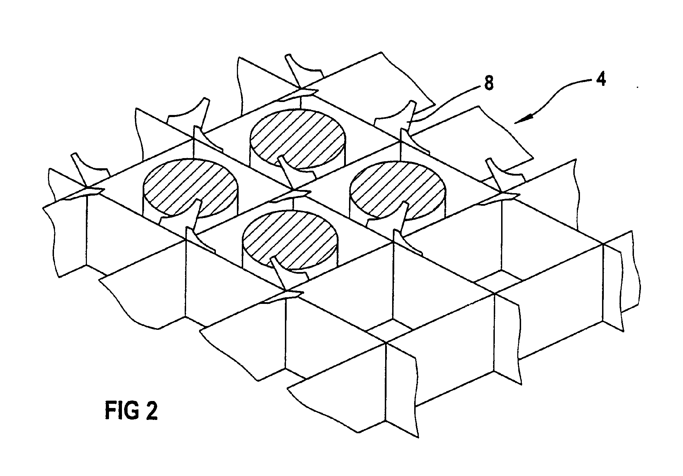

FIG 2       die bereits beschriebenen Leitschaufeln, die zumin- dest an einigen Abstandhaltern oder Zwischengittern vorteilhaft sind;

FIG 3       die bereits beschriebene Abhängigkeit der Korrosions- rate von dem Parameter A der normalisierten. Glühdauer an der Oberfläche eines Druckwasser-Brennstabs;

FIG 4 und 5       den bereits beschriebenen Zustand einer fri- schen Brennstoff-Tablette vor und nach einem rampenförmigen Anstieg der Leistung;

FIG 6       ein vorteilhaftes Innenleben eines Brennstabs;

FIG 7       einen Querschnitt durch ein Hüllrohr nach dem ersten bevorzugten Ausführungsbeispiel;

FIG 8       die Phasenbereiche der als Matrix in den beiden be- vorzugten Ausführungsbeispielen verwendeten Legierun- gen;

FIG 9       das Schema der Verfahrensschritte zur Herstellung des ersten Ausführungsbeispiels;

FIG 10       einen Querschnitt durch ein Hüllrohr nach dem zweiten bevorzugten Ausführungsbeispiel und

FIG 11       das Schema der Verfahrensschritte bei der Herstellung dieses zweiten Ausführungsbeispiels.

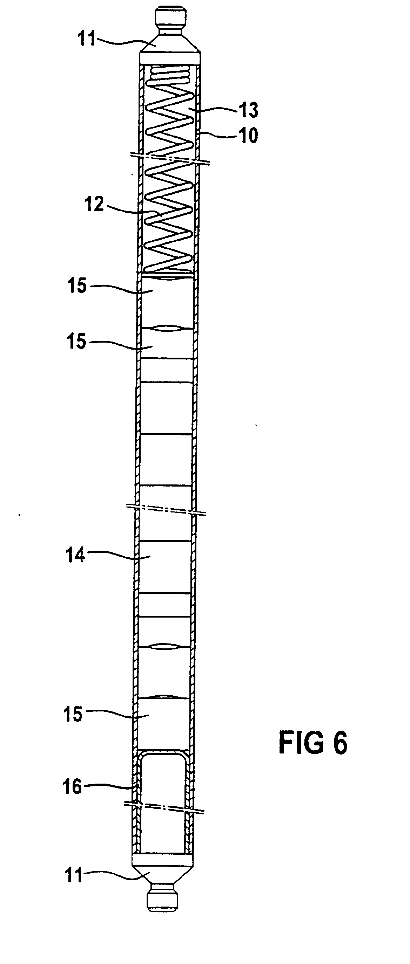

Gemäß Figur 6 ist das Hüllrohr 10 der Brennstäbe jeweils durch einen Endstopfen 11 am oberen und unteren Ende gasdicht verschlossen, wobei am oberen Ende eine auf Druck beanspruchte Feder 12 dafür sorgt, daß mindestens an diesem oberen Ende ein entsprechendes Plenum 13 aufrecht erhalten wird. Die Säule der Brennstoff-Tabletten 14 enthält an ihrem oberen und unteren Ende jeweils einen Körper 15, der praktisch kein spaltbares Material enthält und z.B. aus Aluminiumoxid oder auch Natururan oder abgereichertem Uran bestehen kann. Das Hüllrohr ist dabei zur Erhöhung der Leitfähigkeit zwischen den Tabletten 14 und dem Hüllrohr 10 mit einem Gas hohen Drucks (z.B. Helium) gefüllt.

Im vorliegenden Fall hält auch ein Stützkörper 16 am unteren Ende des Brennstabs ein entsprechendes Plenum frei.

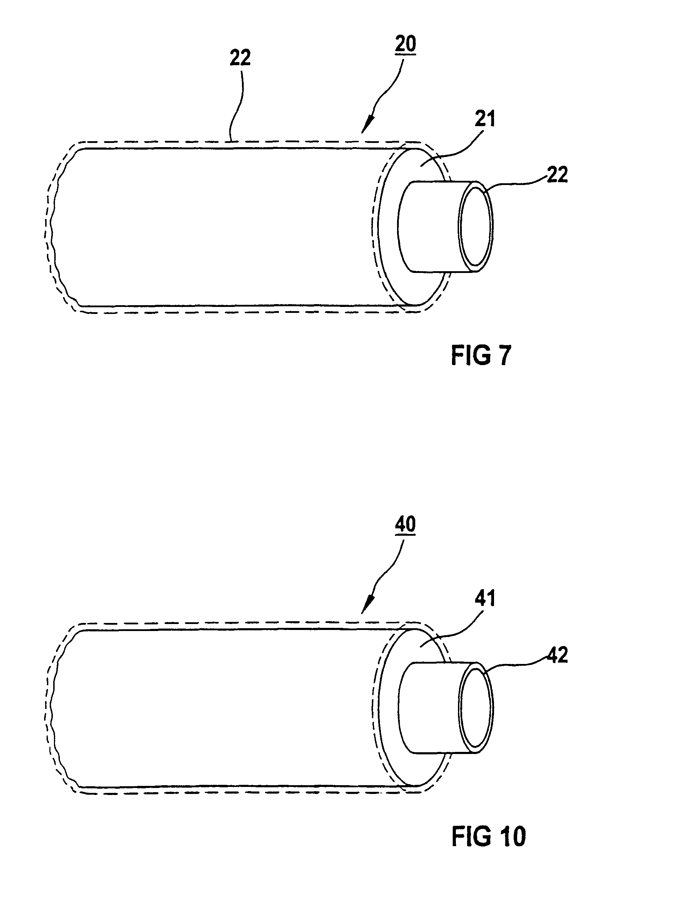

Der Außendurchmesser des Hüllrohrs beträgt etwa 9,55 mm, seine Wandstärke liegt etwa bei 0,61 mm. Gemäß Figur 7 besteht das Hüllrohr 20 aus einer Matrix 21, deren Dicke etwa 75 bis 95 % der Hüllrohrwand beträgt. An diese Matrix ist auf der Innenseite des Hüllrohrs eine Schutzschicht 22 metallurgisch gebunden, wobei außerdem angedeutet ist, daß auch noch an der Außenseite eine weitere Schutzschicht 22 angebracht sein kann.

In der Tabelle 2 sind die unteren und oberen Grenzwerte für die Zusammensetzung I der Matrix 21 angegeben. Dabei beschreiben die in Klammern angegebenen Werte jeweils bevorzugte, engere Grenzen für die Gehalte der einzelnen Legierungsbestandteile bzw. der besonders bevorzugten Grenzwerte für die Begleitelemente der Legierungsbestandteile, die als Verunreinigungen bereits im Zirkonium technischer Reinheit ("Schwamm", vergleiche Tabelle 1) enthalten sind und für die - wie im Fall des Sauerstoffs oder des Siliziums - auch vorteilhafte Untergrenzen eingehalten werden können.

Im bevorzugten Ausführungsbeispiel enthält diese Matrix 21 $1,3 \pm 0,1$ % Sn; $0,28 \pm 0,04$ % Fe; $0,16 \pm 0,03$ % Cr; $0,01 \pm 0,002$ % Si und $0,14 \pm 0,02$ % O. Die Größe der ausgeschiedenen Sekundärphasen beträgt dabei $30 \cdot 10^{-18}$ h.

Die Schutzschicht 22 besteht aus $0,4 \pm 0,04$ % Fe und Zirkonium-Schwamm, wobei die Ausscheidungsgröße durch $A = 1 \cdot 10^{-18}$ h bestimmt ist.

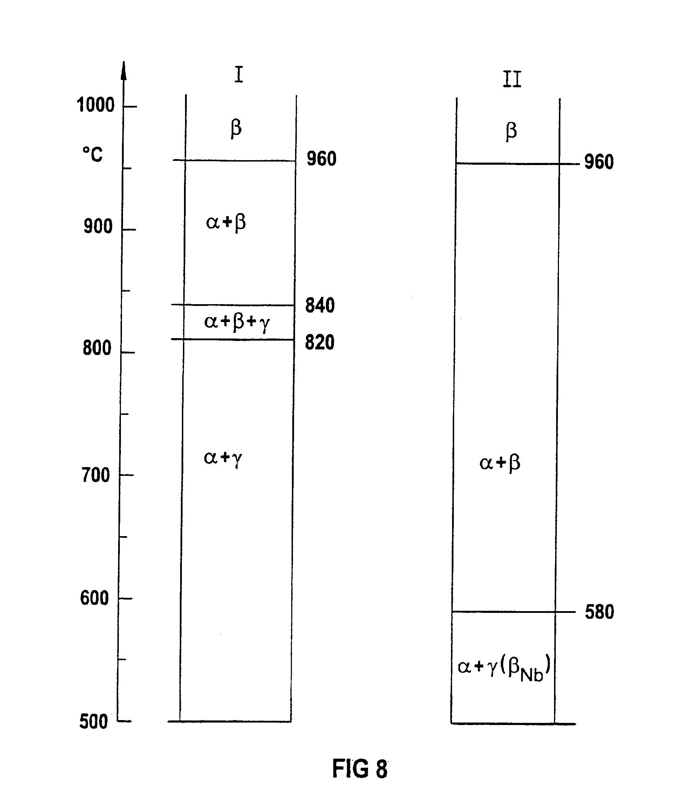

Die Ausscheidungen bestehen in dieser zweiten Phase praktisch aus intermetallischen ZrFe-Verbindungen, im Fall der Matrix 21 aus Mischverbindungen des Zirkoniums mit Eisen und Chrom, wobei in Figur 8 unter I erkennbar ist, daß bis zu Temperaturen von etwa 820° eine $\alpha$-Phase aus ZrSn neben der entsprechenden Sekundärphase $\gamma$ dieser Ausscheidungen vorliegt. Im Bereich zwischen etwa 820 und 960 °C liegt neben der $\alpha$-Phase auch eine $\beta$-Phase von ZrSn vor, wobei etwa bei 840°C ("Lösungstemperatur") die $\gamma$-Phase der intermetallischen Verbindungen in Lösung geht. Über 960 °C ist nur noch die $\beta$-Phase mit den gelösten Ausscheidungen stabil. Wird daher die Matrix bis in den $\beta$-Bereich (Temperaturen über 960 °C) erwärmt und anschließend rasch abgekühlt, so bildet sich zunächst eine feinkörnige $\alpha$-Phase, in der ein Teil des Eisens als Ausscheidungen der $\gamma$-Phase feindispers verteilt sind, während der Rest des Eisens als meta-stabile Übersättigung in der $\alpha$-Phase gebunden bleibt. Dabei bilden die feindispersen Ausscheidungen entsprechend Kerne, an denen sich der überschüssige Eisen-Anteil um so schneller und stärker anlagert, je höher die Temperatur und die Dauer ist, bei der das Matrix-Material weiteren Temperaturbehandlungen im $\alpha$-Bereich (Temperaturen unter 820 °C) ausgesetzt wird.

Zur Herstellung des Hüllrohrs 20 ist vorgesehen, daß zunächst die für die Matrix 21 vorgesehene erste Legierung aus ZrSnFeCr in einem Schritt 30a zur Homogenisierung der Legierungsbestandteile mehrfach unter Vakuum umgeschmolzen und in einem Schritt 31a auf eine zur Verarbeitung eines Rohr-Rohlings geeignete Form geschmiedet und in einem weiteren Schritt 32a von einer Temperatur im $\beta$-Bereich (über 960 °C) rasch abgekühlt wird ("$\beta$-Quench"). Daran kann sich ein weiteres Schmieden (Schritt 33) anschließen, wobei spätestens während eines Schrittes 34 der erste Rohr-Rohling Ra hergestellt wird. Dieser Schritt 34 schließt ferner weitere Glühungen an, um in diesem ersten Rohr-Rohling den Parameter $A = 30 \cdot 10^{-18}$ h einzustellen.

In ähnlicher Weise wird die für die Schutzschicht 22 vorgesehene zweite Zirkoniumlegierung (ZrFe) in einem Schritt 30b ebenfalls umgeschmolzen, in einem Schritt 31b in den $\beta$-Bereich (Temperaturen über 960 °C) erhitzt und im Schritt 32b rasch abgekühlt. Während dieser Schritte ist auch ein zweiter Rohr-Rohling Rb hergestellt. An das $\beta$-Quenching (Schritt 32b) schließt sich in diesem Fall praktisch keine weitere Erwärmung an, vielmehr werden die beiden Rohlinge, deren Form aneinander angepaßt wurde, ineinander gesetzt, miteinander verschweißt und in einem Schritt 35 gemeinsam extrudiert. Diese Co-Extrusion trägt praktisch nicht zum Reifen der Ausscheidungen bei, so daß in dem entstehenden Verbundrohr das Matrix-Material den Wert $A = 30 \cdot 10^{-18}$ h und die zweite Zirkoniumlegierung praktisch den Wert $A = 0$ besitzt. Anschließend werden mehrere Pilgerschritte 36 durchgeführt, zwischen denen jeweils kurzzeitige Glühungen bei Temperaturen weit unter 820 °C durchgeführt werden, um das kaltverformte Material zu erholen und für den nächsten Pilgerschritt vorzubereiten. Durch eine Abschlußglühung 37 wird dann erreicht, daß für die gesamte Verarbeitung des Verbundrohrs zum fertigen Hüllrohr der Parameter $A = 1 \cdot 10^{-18}$ h eingestellt ist, also die erste Zirkoniumlegierung der Matrix den Wert $A = 31 \cdot 10^{-18}$ h, die zweite Zirkoniumlegierung der Schutzschicht aber den Wert $A = 1 \cdot 10^{-18}$ h besitzt.

Für die Schritte 33 und 34 wird ein Bereich $A = 2$ bis $80 \cdot 10^{-18}$ h eingehalten, wobei Werte über $5 \cdot 10^{-18}$ h vorteilhaft sind. Werte über $60 \cdot 10^{-18}$ h bedeuten lange Glühdauern bei hohen Temperaturen, die nicht notwendig erscheinen. Für die Schritte 35 bis 37 können im allgemeinen Werte $A$ unter $2 \cdot 10^{-18}$ eingehalten werden. Für die fertige Zirkoniumlegierung der Matrix erscheinen daher Werte $A = 5$ bis $60 \cdot 10^{-18}$ h vorteilhaft, während für die zweite Zirkoniumlegierung der Schutzschicht $A = 1$ bis $3 \cdot 10^{-18}$ h eingehalten werden sollte.

Beim zweiten Ausführungsbeispiel gemäß Figur 10 besteht das Hüllrohr 40 aus der Matrix 41 mit der Zusammensetzung 1,0 ± 0,2 % Nb, 0,14 ± 0,02 % O, Rest: Zirkonium technischer Reinheit, wobei in Tabelle 2 unter II die bevorzugten Grenzen für die Bestandteile in ähnlichen Zusammensetzungen angegeben sind.

Unter II ist in Figur 8 erkennbar, daß im Phasendiagramm dieser Legierung bei Temperaturen bis 480°C eine stabile $\alpha$-Phase vorliegt, in der etwa die Hälfte des Niobs gelöst ist, während der Rest als stabile $\beta$-Phase des Niob ausgeschieden ist. Bei 580 °C liegt eine Mischphase $\alpha + \beta$ vor, in der praktisch alles Niob gelöst ist, während bei Temperaturen über 960°C nur noch eine $\beta$-Phase des Zirkoniums mit dem vollständig gelösten Niob existiert.

Die zweite Zirkoniumlegierung in der Schutzschicht 42 des Hüllrohrs 40 besteht aus der gleichen ZrFe-Legierung wie im bereits beschriebenen ersten bevorzugten Ausführungsbeispiel.

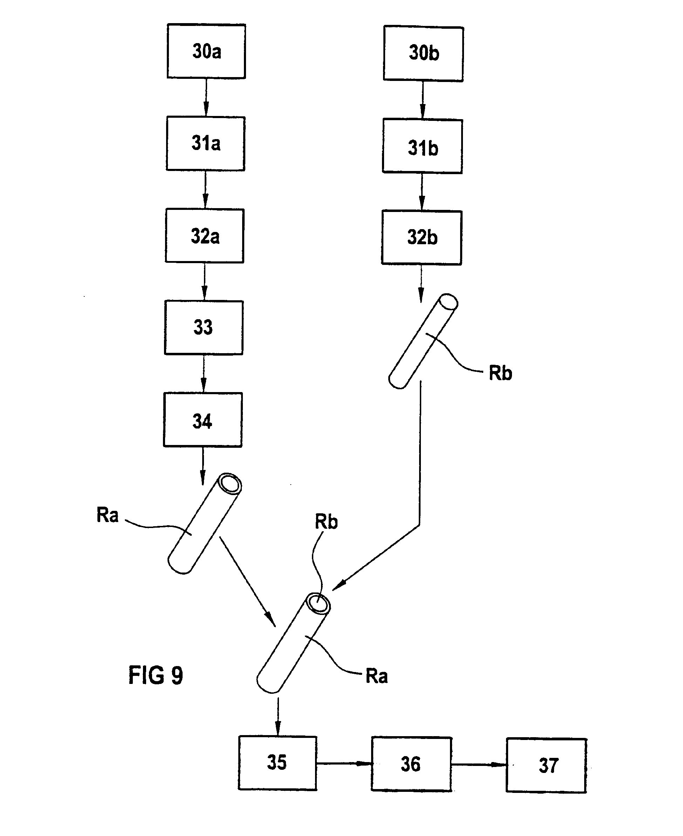

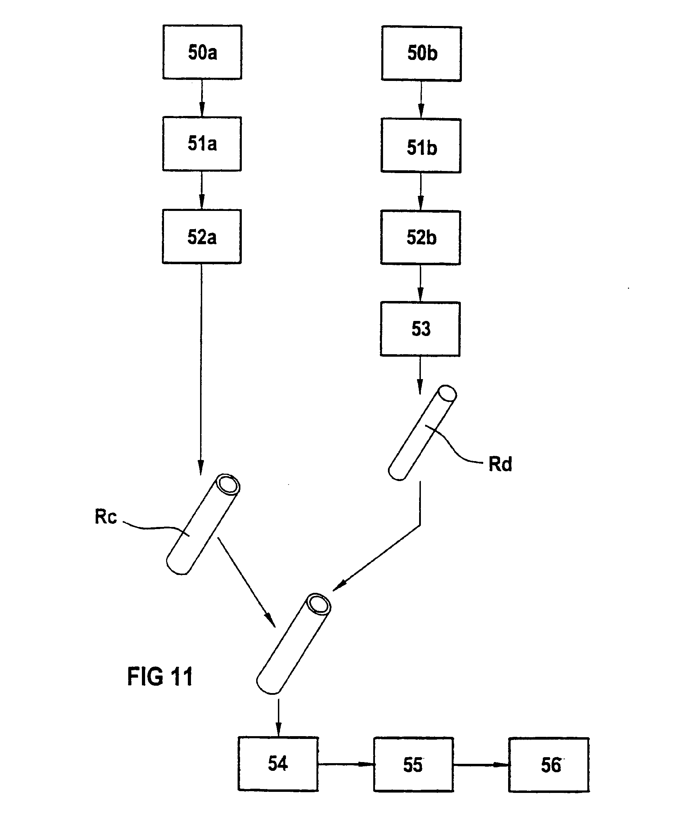

Für die Herstellung des Hüllrohrs 40 ergibt sich ein der Figur 9 ähnliches Schema gemäß Figur 11. Jedoch wird hierbei die erste Zirkoniumlegierung ZrNb der Matrix nach mehrfachem Umschmelzen unter Vakuum (Schritt 50a) und Schmieden im $\beta$-Bereich (Temperaturen über 960 °C) gequencht (Schritt 52), wobei der erste Rohr-Rohling Rc aus dem Matrix-Material hergestellt wird, ohne daß sich an das $\beta$-Quenchen (Schritt 52a) eine Temperaturbehandlung mit einem nennenswerten Parameterwert A anschließt. Ein derartiger Schritt ist nur für die zweite Zirkoniumlegierung der Schutzschicht vorgesehen, bei der sich an ein mehrfaches Umschmelzen im Vakuum (Schritt 50b) und Schmieden im $\beta$-Bereich (Schritt 51b) ein $\beta$-Quenchen (Schritt 52b) von einer Glühung bei Temperaturen unter etwa 600°, insbesondere unter 580 °C ($\alpha$-Bereich) ausschließt. Hierbei wird der zweite Rohr-Rohling Rd erzeugt, der genau in das Innere des ersten Rohr-Rohlings Rc eingefügt wird. Für den in den Schritten 51a und 52a hergestellten ersten Rohr-Rohling Rc ergibt sich praktisch der Parameterwert A = 0, während bei den Schritten 51b, 52b und 53 der zweite Rohr-Rohling Rd mit einem Parameterwert unter $2 \cdot 10^{-18}$ h hergestellt werden kann. Im Ausführungsbeispiel wurde im Schritt 53 eingestellt A = $1 \cdot 10^{-18}$ h.

Die beiden ineinander eingesetzten Rohr-Rohlinge werden miteinander verschweißt und zusammen extrudiert, anschließend in mehreren Pilgerschritten mit dazwischen geschalteten Erholungsglühungen auf die Endabmessungen des Hüllrohrs gebracht (Schritt 55) und einer Abschlußglühung 56 unterworfen. Bei den Schritten 54 bis 56 wird A kleiner $0,5 \cdot 10^{-18}$ h eingehalten, wobei auch Werte A kleiner $0,1 \cdot 10^{-18}$ h möglich sind (hier: A = $0,9 \cdot 10^{-18}$ h).

Entsprechend dem Wert A kleiner $0,5 \cdot 10^{-18}$ (vorzugsweise A kleiner $0,2 \cdot 10^{-18}$, mindestens jedenfalls kleiner $0,3 \cdot 10^{-18}$) für die Schritte 50a bis 52a ergibt sich im fertigen Hüllrohr für die erste Zirkoniumlegierung der Matrix 41 bevorzugt ein Wert A kleiner $0,1 \cdot 10^{-18}$ h, für die zweite Zirkoniumlegierung dagegen ein Wert A = 0,1 bis $3 \cdot 10^{-18}$ h, bevorzugt zwischen 0,2 und $1,5 \cdot 10^{-18}$ h.

Die auf diese Weise hergestellten Hüllrohre werden mit den Säulen aus verhältnismäßig stark angereicherten Brennstoff-Tabletten und dem Gas hohen Drucks gefüllt, mittels der Endstopfen gasdicht verschlossen und in das erwähnte Skelett eingesetzt. Sie besitzen einen hohen Abbrand, der eine lange Nutzungsdauer im Druckwasser-Reaktor ermöglicht. Beim Betrieb des Druckwasser-Reaktors brauchen die zulässigen Änderungsgeschwindigkeiten bei der Leistungssteuerung im wesentlichen nur noch auf die durch die Physik des Brennstoffs und des Reaktors gegebenen Zeitkonstanten abgestimmt zu werden, wobei nur noch eine geringe Rücksicht auf mögliche Materialschäden genommen zu werden braucht, die selbst nach längeren Zeiten des Teillastbetriebes an den Hüllrohren beim Hochfahren der Reaktorleistung entstehen könnten.

**Tabelle 1**

| | Sponge | Zry2 | Zry 4 | Zr/Nb |
|---|---|---|---|---|
| | Composition, Weight % | | | |
| Element | Grade R60001 | Grades R60802 R60812 | Grades R60804 R60814 | Grade R60901 |
| Tin | ... | 1.20-170 | 1.20-170 | ... |
| Iron | ... | 0.07-0.20 | 0.18-0.24 | ... |
| Chromium | ... | 0.05-0,15 | 0.07-0.13 | ... |
| Nickel | ... | 0.03-0.08 | ... | ... |
| Niobium | ... | ... | ... | 2.40-2.80 |
| Oxygen | ^ | ^ | ^ | 0.09-0.13 |
| Iron + Chromium + Nickel | ... | 0.18-0.38 | ... | ... |
| Iron + Chromium | ... | ... | 0.28-0.37 | ... |

(fortgesetzt)

| Maximum Impurities, Weight % | | | | |
|---|---|---|---|---|
| Aluminium | 0.0075 | 0.0075 | 0.0075 | 0.0075 |
| Boron | 0.00005 | 0.00005 | 0.00005 | 0.00005 |
| Cadmium | 0.00005 | 0.00005 | 0.00005 | 0.00005 |
| Carbon | 0.027 | 0.027 | 0.027 | 0.027 |
| Chromium | 0.020 | ... | ... | 0.020 |
| Cobalt | 0.0020 | 0.0020 | 0.0020 | 0.0020 |
| Copper | 0.0050 | 0.0050 | 0.0050 | 0.0050 |
| Hafnium | 0.010 | 0.010 | 0.010 | 0.010 |
| Hydrogen | 0.0025 | 0.0025 | 0.0025 | 0.0025 |
| Iron | 0.150 | ... | ... | 0.150 |
| Magnesium | 0.0020 | 0.0020 | 0.0020 | 0.0020 |
| Manganese | 0.0050 | 0.0050 | 0.0050 | 0.0050 |
| Molybdenum | 0.0050 | 0.0050 | 0.0050 | 0.0050 |
| Nickel | 0.0070 | ... | 0.0070 | 0.0070 |
| Nitrogen | 0.0080 | 0.0080 | 0.0080 | 0.0080 |
| Silicon | 0.0120 | 0.0120 | 0.0120 | 0.0120 |
| Tin | 0.0050 | ... | ... | 0.0050 |
| Tungsten | 0.010 | 0.010 | 0.010 | 0.010 |
| Uranium(total) | 0.00035 | 0.00035 | 0.00035 | 0.00035 |
| ^When so specified in the purchase order, oxygen shall be determined and reported. Maximum or minimum permissible values, or both, shall be as specified in the purchase order. | | | | |

**Tabelle 2**

| | I | | II | |
|---|---|---|---|---|
| | min. | max. | min. | max. |
| Sn | 1.0 (1.2)% | 1.8 (1.5) % | ... | 1.2 (0.005) |
| Fe | 0.2 (0.24)% | 0.6 (0.5/0,4) | ... | 1.2 (0.15) |
| Cr | (0.8/010/012) | 0.3 (0.25/0.20) | ... | 0.3 (0.02) |
| Nb | ... | ... | 0.8 | 2.8 (1.3) |
| Rest: "Zr-Schwamm" mit: | | | | |
| O | (0.10/0.12 | (0.20/0.18/0.16) | (0.10/0.12 | (0.20/0.18/0.16) |
| C | ... | (0.01) | ... | (0.02) |
| N | ... | (0.005) | ... | (0.005) |
| Si | (0.005/0.007) | (0.012) | ... | (0.012) |
| P | ... | (0.03) | ... | (0.03) |

**Patentansprüche**

1. Brennelement für einen Druckwasser-Reaktor, mit einem seitlich offenen Skelett aus Steuerstab-Führungsrohren (5), an denen Abstandhalter (3,4) sowie ein Brennelement-Kopf (1) und ein Brennelement-Fuß (2) befestigt sind, und mit in das Skelett eingesetzte, jeweils mit einer Säule aus Brennstofftabletten (14) gefüllten, gasdichten Hüllrohren (10), wobei mindestens einige Hüllrohre jeweils eine mehrschichtige Wand mit folgenden Merkmalen aufweisen :

   a) Die Wand umfasst eine mechanisch stabile Matrix aus einer ersten, stärker legierten Zirkoniumlegierung, an die eine dünnere Schutzschicht aus einer schwächer legierten, zweiten Zirkoniumlegierung metallurgisch gebunden ist,
   b) die Schutzschicht befindet sich auf der den Brennstoff-Tabletten zugewandten Innenseite der Matrix,
   c) die zweite Zirkoniumlegierung enthält 0,2 Gew.-% bis 0,8 Gew.-% Eisen, Rest: Zirkonium technischer Reinheit,
   d) wobei die beiden Zirkoniumlegierungen Ausscheidungen von Sekundärphasen aufweisen, die durch Temperaturbehandlungen mit unterschiedlichen normalisierten Glühdauern zu unterschiedlicher mittlerer Größe gereift sind.

2. Brennelement nach Anspruch 1,
   **dadurch gekennzeichnet,**
   **dass** die zweite Zirkoniumlegierung mindestens 0,3 % Eisen enthält.

3. Brennelement nach Anspruch 1 oder 2,
   **dadurch gekennzeichnet,**
   **dass** die zweite Zirkoniumlegierung höchstens 0,6 % Eisen enthält.

4. Brennelement nach einem der vorhergehenden Ansprüche,
   **dadurch gekennzeichnet,**
   **dass** der Eisengehalt der zweiten Legierung $0,40 \pm 0,04$ Gew.-% beträgt.

5. Brennelement nach einem der vorhergehenden Ansprüche,
   **dadurch gekennzeichnet,**
   **dass** die zweite Zirkoniumlegierung Ausscheidungen von Sekundärphasen aufweist, deren Größe einer normalisierten Glühdauer von etwa 0,1 bis $3 \cdot 10^{-18}$ h entspricht.

6. Brennelement nach einem der vorhergehenden Ansprüche,
   **dadurch gekennzeichnet,**
   **dass** die erste Zirkoniumlegierung 1,0 bis 1,8 % Sn, 0,2 bis 0,6 % Fe und bis 0,3 % Cr, Rest: Zirkonium technischer Reinheit enthält.

7. Brennelement nach Anspruch 6,
   **dadurch gekennzeichnet,**
   **dass** die erste Zirkoniumlegierung 1,2 bis 1,5 % Sn, 0,24 bis 0,5 % Fe und 0,10 bis 0,25 %-Cr enthält.

8. Brennelement nach Anspruch 7,
   **gekennzeichnet durch** $1,3 \pm 0,1$ % Sn ; $0,28 \pm 0,04$ % Fe ; $0,16 \pm 0,03$ % Cr ; $0,01 \pm 0,002$ % Si und $0,14 \pm 0,02$ % O in der ersten Zirkoniumlegierung.

9. Brennelement nach einem der vorhergehenden Ansprüche,
   **dadurch gekennzeichnet,**
   **dass** die erste Zirkoniumlegierung Ausscheidungen von Sekundärphasen aufweist, deren Größe einer größeren normalisierten Glühdauer entspricht als die Glühdauer, der die Größe der Ausscheidungen in der zweiten Zirkoniumlegierung entspricht.

10. Brennelement nach Anspruch 9,
    **dadurch gekennzeichnet,**
    **dass** die Größe der Ausscheidungen in der ersten Zirkoniumlegierung einer normalisierten Glühdauer von 2 bis $80 \cdot 10^{-18}$ h, vorzugsweise $(30 \pm 10) \cdot 10^{-18}$ h, entspricht.

**11.** Brennelement nach einem der vorhergehenden Ansprüche,
**dadurch gekennzeichnet,**
**dass** zumindest die Abstandhalter in einem oberen Teil des Brennelements auf ihrer der Strömung des Druckwasser abgewandten Seite Strömungsleitschaufeln zur Durchmischung des Druckwassers tragen.

**12.** Brennelement nach einem der vorhergehenden Ansprüche,
**dadurch gekennzeichnet,**
**dass** die Hüllrohre mit einem Gas erhöhten Drucks gefüllt sind und mindestens am oberen Ende ein Plenum aufweisen.

**13.** Brennelement nach Anspruch 12,
**dadurch gekennzeichnet,**
**dass** die Enden der Säulen aus Brennstoff-Tabletten Körper tragen, die praktisch kein spaltbares Material enthalten.

**14.** Brennelement nach einem der vorhergehenden Ansprüche,
**dadurch gekennzeichnet,**
**dass** an der Außenseite der Wand eine weitere Schutzschicht aus einer dritten Zirkoniumlegierung metallurgisch gebunden ist, die dünner ist als die Matrix.

**Claims**

**1.** Fuel element for a pressurized water reactor, with a laterally open skeleton consisting of control-rod guide tubes (5), to which are fastened spacers (3, 4) and also a fuel element head (1) and a fuel element foot (2), and with gastight cladding tubes (10) inserted into the skeleton and each filled with a column of fuel pellets (14), at least some cladding tubes each having a multilayer wall with the following features:

a) The wall comprises a mechanically stable matrix consisting of a first zirconium alloy, alloyed to a greater extent, to which a thinner protective layer of a second zirconium alloy alloyed to a lesser extent is bound metallurgically,
b) the protective layer is located on the matrix inside facing the fuel pellets,
c) the second zirconium alloy contains 0.2% by weight to 0.8% by weight of iron, the remainder: zirconium of industrial purity,
d) the two zirconium alloys having precipitations of secondary phases which, by thermal treatments with different standardized annealing durations, are ripened to a different average size.

**2.** Fuel element according to Claim 1, **characterized in that** the second zirconium alloy contains at least 0.3% of iron.

**3.** Fuel element according to Claim 1 or 2, **characterized in that** the second zirconium alloy contains at most 0.6% of iron.

**4.** Fuel element according to one of the preceding claims, **characterized in that** the iron content of the second alloy is $0.40 \pm 0.04\%$ by weight.

**5.** Fuel element according to one of the preceding claims, **characterized in that** the second zirconium alloy has precipitations of secondary phases, the size of which corresponds to a standardized annealing duration of about 0.1 to $3 \cdot 10^{-18}$ h.

**6.** Fuel element according to one of the preceding claims, **characterized in that** the first zirconium alloy contains 1.0 to 1.8% Sn, 0.2 to 0.6% Fe and up to 0.3% Cr, the remainder: zirconium of industrial purity.

**7.** Fuel element according to Claim 6, **characterized in that** the first zirconium alloy contains 1.2 to 1.5% Sn, 0.24 to 0.5% Fe and 0.10 to 0.25% Cr.

**8.** Fuel element according to Claim 7, **characterized by** $1.3 \pm 0.1\%$ Sn; $0.28 \pm 0.04\%$ Fe; $0.16 \pm 0.03\%$ Cr; $0.01 \pm 0.002\%$ Si and $0.14 \pm 0.02\%$ O in the first zirconium alloy.

9. Fuel element according to one of the preceding claims, **characterized in that** the first zirconium alloy has precipitations of secondary phases, the size of which corresponds to a higher standardized annealing duration than the annealing duration to which the size of the precipitations in the second zirconium alloy corresponds.

10. Fuel element according to Claim 9, **characterized in that** the size of the precipitations in the first zirconium alloy corresponds to a standardized annealing duration of 2 to 80 · $10^{-18}$ h, preferably $(30 \pm 10) \cdot 10^{-18}$ h.

11. Fuel element according to one of the preceding claims, **characterized in that** at least the spacers in an upper part of the fuel element carry, on their side facing away from the flow of pressurized water, flow guide blades for intermixing the pressurized water.

12. Fuel element according to one of the preceding claims, **characterized in that** the cladding tubes are filled with a gas of increased pressure and have a plenum at least at the upper end.

13. Fuel element according to Claim 12, **characterized in that** the ends of the columns of fuel pellets carry bodies which contain virtually no fissionable material.

14. Fuel element according to one of the preceding claims, **characterized in that** a further protective layer of a third zirconium alloy which is thinner than the matrix is bonded metallurgically to the outside of the wall.

**Revendications**

1. Elément combustible pour un réacteur à eau pressurisée, avec une ossature ouverte constituée de tubes de guidage (5) pour barres de contrôle sur lesquels sont fixés des espaceurs (3, 4) ainsi qu'une tête d'élément combustible (1) et un pied d'élément combustible (2), et avec des gaines (10) étanches aux gaz insérées dans ladite ossature, chaque gaines étant remplie par une colonne constituée de pastilles de combustible (14), au moins quelques unes des gaines présentant une paroi multicouche ayant les caractéristiques suivantes :

 a) La paroi comprend une matrice mécaniquement stable constituée d'un premier alliage de zirconium avec un taux d'alliage relativement élevé, auquel une couche protectrice plus mince, qui est constituée d'un deuxième alliage de zirconium avec un taux d'alliage relativement faible, est liée de façon métallurgique,
 b) ladite couche protectrice est située sur la face intérieure de ladite matrice, face auxdites pastilles de combustible,
 c) ledit deuxième alliage de zirconium contient 0,2 % en poids à 0,8 % en poids de fer, le reste étant du zirconium de pureté technique,
 d) lesdits deux alliages de zirconium présentent des précipitations de phases secondaires dont la taille moyenne après maturation varie en fonction des traitements thermiques qu'elles subi, lesdits traitements présentant différentes durées de recuit de normalisation.

2. Elément combustible selon la revendication 1,
 **caractérisé en ce que**
 ledit deuxième alliage de zirconium contient au moins 0,3 % de fer.

3. Elément combustible selon les revendications 1 ou 2,
 **caractérisé en ce que**
 ledit deuxième alliage de zirconium contient au maximum 0,6 % de fer.

4. Elément combustible selon l'une des revendications précédentes,
 **caractérisé en ce que**
 la teneur en fer dudit deuxième alliage est de 0,40 $\pm$ 0,04 % en poids.

5. Elément combustible selon l'une des revendications précédentes,
 **caractérisé en ce que**
 ledit deuxième alliage de zirconium présente des précipitations de phases secondaires dont la taille correspond à une durée de recuit de normalisation comprise entre environ 0,1 et $3 \cdot 10^{-18}$ h.

6. Elément combustible selon l'une des revendications précédentes,

**caractérisé en ce que**
ledit premier alliage de zirconium contient 1,0 à 1,8 % de Sn, 0,2 à 0,6 % de Fe et jusqu'à 0,3 % de Cr, le reste étant du zirconium de pureté technique.

**7.** Elément combustible selon la revendication 6,
**caractérisé en ce que**
ledit premier alliage de zirconium contient 1,2 à 1,5 % de Sn, 0,24 à 0,5 % de Fe et 0,10 à 0,25 % de Cr.

**8.** Elément combustible selon la revendication 7,
**caractérisé par**
1,3 $\pm$ 0,1 % de Sn ; 0,28 $\pm$ 0,04 % de Fe ; 0,16 $\pm$ 0,03 % de Cr ; 0,01 $\pm$ 0,002 % de Si et 0,14 $\pm$ 0,02 % de O dans ledit premier alliage de zirconium.

**9.** Elément combustible selon l'une des revendications précédentes,
**caractérisé en ce que**
ledit premier alliage de zirconium présente des précipitations de phases secondaires dont la taille correspond à une durée de recuit de normalisation plus importante que la durée de recuit correspondant à la taille des précipitations dans ledit deuxième alliage de zirconium.

**10.** Elément combustible selon la revendication 9,
**caractérisé en ce que**
La taille des précipitations dans ledit premier alliage de zirconium correspond à une durée de recuit de normalisation comprise entre 2 et 80 · $10^{-18}$ h, de préférence à $(30 \pm 10) \cdot 10^{-18}$ h.

**11.** Elément combustible selon l'une des revendications précédentes,
**caractérisé en ce que**
les espaceurs, au moins dans une partie supérieure dudit élément combustible, sont pourvus, sur leur face détournée du flux de l'eau pressurisée, de chicanes destinées à mélanger ladite eau pressurisée.

**12.** Elément combustible selon l'une des revendications précédentes,
**caractérisé en ce que**
lesdites gaines sont remplies d'un gaz sous pression élevée et présentent, au moins à leur extrémité supérieure, un plénum.

**13.** Elément combustible selon la revendication 12,
**caractérisé en ce que**
les extrémités desdites colonnes constituées de pastilles de combustible sont pourvues de corps ne contenant pratiquement pas de matière fissible.

**14.** Elément combustible selon l'une des revendications précédentes,
**caractérisé en ce que**
une autre couche protectrice, constituée d'un troisième alliage de zirconium, est liée de façon métallurgique à la face extérieure de ladite paroi, cette couche étant plus mince que ladite matrice.

FIG 1

FIG 2

FIG 3

FIG 4

FIG 5

FIG 6

**FIG 7**

**FIG 10**

FIG 8

FIG 9

50a

51a

52a

50b

51b

52b

53

Rd

Rc

FIG 11

54

55

56

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 1564697 A
- EP 0498259 B
- EP 0212351 B
- EP 0301395 B
- EP 0630514 B
- US 5609697 A
- EP 0574194 A1
- US 5790623 A
- EP 0726966 B
- EP 0301295 B

### In der Beschreibung aufgeführte Nicht-Patentliteratur

- **Garzarolli et al.** Zirkonium in the Nuclear Industry: Eighths International Symposium. ASTM Special Technical Publication 1023, 1989, 202-212